# EUROPEAN PATENT SPECIFICATION

(11) **EP 0 272 151 B1**
(45) Date of publication and mention of the grant of the patent: **10.11.1993**
(21) Application number: 87311216.3
(22) Date of filing: 18.12.1987
(51) Int. Cl.: F02C 7/06, F02C 6/12, F01D 25/16, F01D 25/18

(54) **Turbocharger bearing and lubrication system**
Lager- und Schmiersystem für einen Turbolader
Système de paliers et de lubrification pour une turbosoufflante

(30) Priority: 19.12.1986 US 944498
(43) Date of publication of application: 22.06.1988
(73) Proprietor: AlliedSignal Inc., Morristown, New Jersey 07962-2245 (US)
(72) Inventor: Glaser, Jerry, Playa Del Rey California (US); Elpern, David G., Los Angeles California (US)
(74) Representative: Rees, David Christopher

(56) References cited:
- CH-A- 266 731
- DE-A- 3 531 313
- DE-A- 3 617 403
- DE-B- 1 003 511
- GB-A- 642 621
- GB-A- 2 042 649
- GB-A- 2 187 797
- US-A- 2 159 422

## Description

The present invention relates generally to turbochargers and their bearing systems and to methods for their assembly. The invention is particularly concerned with ball bearings used within turbochargers.

The standard turbocharger arrangement consists basically of an exhaust gas driven turbine wheel on a common shaft with a compressor wheel. The manner in which the shaft is supported is critically important. A properly constructed bearing supports the shaft in such a manner as to minimise rotational friction. Other required characteristics of the bearing scheme include isolation of the gases in contact with the turbine and compressor wheels, minimisation of heat transfer from the hot turbine gases and provision of adequate lubrication to combat wear.

The high rotational speed of turbochargers have heretofore tended to prohibit the use of ball bearings in the design. This is because of the extreme centrifugal forces of the orbiting balls can exert more pressure on the outer ball bearing race than the inner ball bearing race exerts on the orbit balls. In this case, the balls will separate from contact with the inner race, allowing the shaft to wobble. At the high rotational speeds of turbochargers, mainly of the order of from 100,000 - 125,000 RPM, this problem is severe. The present invention seeks to eliminate or minimise this problem.

Another major problem involving the turbochargers is the cost and difficulty of manufacture. In building a turbocharger, a number of parts must be cast, machined and then assembled. The time and effort required to assemble the critical bearing support parts during overall turbocharger construction, in good working order, is especially great. This relationship also exists for other part groupings, such as the lubrication parts group.

DE-A-3617403 discloses a turbocharger assembly including a turbine wheel and a compressor wheel mounted on a common shaft. The shaft is supported by a bearing at each end, the bearings being mounted in a housing between the turbine and the compressor. It is a further object of the invention to provide construction of the turbocharger which will save time and labour costs.

Another problem is overheating of turbocharger internals from frictionally produced as well as exhaust heat. The present invention has as a further object to produce a cooling air flow along the shaft, countercurrent to the heat source.

Another problem encountered in turbocharger design involves the lubrication system. Turbochargers often use the same lubrication system of the engines which they serve. Engine lubricant systems usually allow abrasive matter in the lubricant which, given the close tolerancing of turbochargers, will lead to undue scoring and wear of the bearing surfaces. It is therefore a further object of the invention to minimise those drawbacks.

According to one aspect of the invention, there is a turbocharger comprising: a turbine, having a turbine wheel; a compressor, having a compressor wheel; a shaft having two ends, one end being connected to the turbine wheel and the other end being connected to the compressor wheel; bearing means, for rotatably supporting the shaft, the bearing means including a first bearing at the turbine end of the shaf and a second bearing at the compressor end of the shaft; and a housing disposed between the turbine and compressor, the housing supporting the bearing means, characterised in that the bearing means is a ball bearing cartridge bearing in which the first and second bearings share a common race.

The turbocharger preferably also includes lubrication means which are separate from the internal combustion engine lubrication system to lubricate the bearing means.

Normally a separate lubrication supply system requires a mechanical connection to the engine which the turbocharger serves. The separate lubrication system of the present invention is a compact, self-contained, electrically driven cartridge type which can, in the vent of failure, be easily replaced.

Preferably, the bearing means includes an inner race rotatable with the shaft, a plurality of outer races supported by the centre housing and a multiplicity of ball bearings disposed between the inner and outer races to allow the inner race to rotate with respect to the outer races. Preferably, the bearing means includes means to preload the ball bearings towards the rotatable inner race. Thus, shaft wobble may be eliminated or minimised. Furthermore, this construction enables the bearing parts to be assembled into cartridge-type assemblies prior to ultimate construction thereby saving time and labour costs.

Preferably, the assembly includes air ventilation means allowing air to flow along and to cool the shaft. Preferably, this takes the form of an air slinger mounted on the inner race, freely rotatable within the main housing, and may also comprise a multiplicity of ribs mounted in the annular space between the shaft and the inner race, and parallel to the axis of the shaft, to allow air flow longitudinally along the shaft in the annular space between the outer surface of the shaft and the inner surface of the inner race, the inner race having one or more apertures near the end of the shaft opposite the air slinger, to permit entry of air into the annular space between the shaft and the inner race, to facilitate air flow for cooling the shaft.

The turbocharger may also include a squeeze film damper between the outer periphery of the outer races and the inner periphery of the bearing bore within the main housing, to absorb energy and thus dampen any tendency of the bearing assembly and the shaft towards axial angular displacement. Preferably, the squeeze film damper is formed by each of the outer races having an external surface whose general cylindrical shape is reduced to a slight frusto-conical shape to the degree necessary to form a squeeze film damper against the bearing bore, into which it is to be placed, the angle of the frusto-conical approach and the space between the slight frusto-conical outer periphery of the outer race and the inner periphery of the bearing bore to be dictated by the physical properties of the material to be used interstitially to form the squeeze film damper.

Preferably the lubrication means has a ribbed exterior to aid in the dissipation of heat.

Preferably the bearing means is a cartridge bearing which comprises: a tubular inner ball bearing race having an internal diameter suitable for fitting around the outside diameter of the turbocharger shaft to be supported, the inner race also having a pair of outwardly disposed grooves located on its outside circumference, axially near the ends of the inner race; a multiplicity of ball bearings situated circumferentially around the outer diameter of the inner race and within the grooves of the inner race; a ball bearing separator fittable circumferentially outwards of the external diameter of the inner race, the ball bearing separator having a series of circular slots about the midpoint of its axial length, the slots being dimensioned to receive the ball bearings and to separate the ball bearings in their orbit around the inner race; a pair of outer races annularly cylindrically shaped, each having an axially linear outside surface, and having an internal shoulder such that the greater diameter of the internal surface is nearer the end outwardly disposed with respect to the ball bearing cartridge assembly, the shoulder allowing the outer races to be slipped directly over the ball bearings located within the grooves of the inner race and to continue until the shoulder within the internal diameter of the inner wall of the outer race contacts and bears against the ball bearings, further urging the ball bearings against the groove of the inner race; a spacer assembly generally of annular piston-like shape, having a parallel sided opening along its length, the opening being greater than the diameter of the inner race, around which the spacer assembly lies, the spacer assembly further having a series of longitudinal bores whose axes are parallel to the axis of the spacer assembly, the bores being radially spaced about the axis of the spacer assembly for axially separating and urging apart the outer races; and a multiplicity of preload springs located within the bores, the preload springs acting to urge contact with the inwardly disposed faces of the outer races thereby springingly urging the outer races away from each other and away from the spacer assembly, in order to maintain the force applied to the ball bearings by the bearing pressure of the inner and outer races against the ball bearings.

The invention may be carried into practice in various ways and some embodiments will now be described by way of example with to the accompanying drawings in which:-
Figure 1 is a cross sectional view of a turbocharger in accordance with the present invention;
Figure 2 is an enlarged cross-sectional view of a portion of the turbocharger of Figure 1 showing the ball bearing cartridge;
Figure 3 is an isometric view of the horseshoe shaped spacer assembly of the ball bearing cartridge of Figure 2;
Figure 4 is an enlarged isometric view of a portion of the turbocharger shaft of Figures 1 and 2;
Figure 5 is a top sectional view partially cut away of the ball bearing cartridge of Figure 2;
Figure 6 is an enlarged cross-section of the end of the outer races of the ball bearing cartridge of Figure 2, illustrating the centrifugal, preload, and resultant forces acting upon the ball bearing; and
Figure 7 is a cross section of a turbocharger illustrating the cartridge-lubrication system of the present invention.

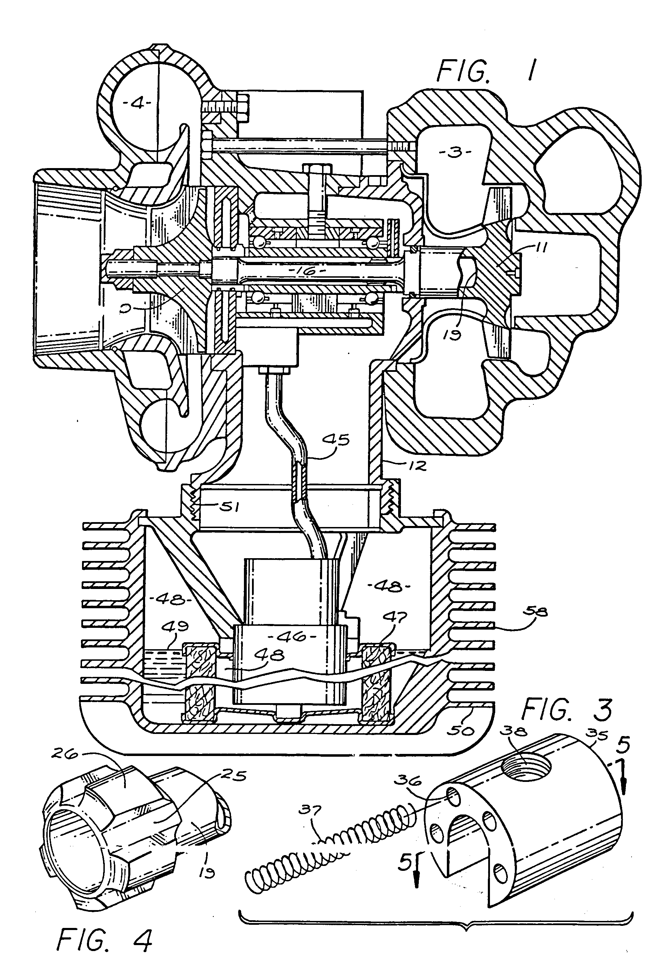

Referring to Figure 1, the turbocharger has a turbine wheel 11 and a compressor wheel 10 which are joined by a shaft 16. A portion of the shaft 16 nearest turbine blade assembly 11 contains a void 19 which reduces the area available for thermal conduction from the turbine blade assembly 11 via the shaft 16.

Now, referring to Figure 2 for an enlarged view of the details of the bearing assembly, the shaft 16 has a shaft piston ring slot 8 near the turbine wheel 11. The turbocharger body 12 surrounds this portion of the shaft 16, and a shaft piston ring 7 is fitted in frictional contact with the body 12 so that the shaft piston ring 7 fits closely within the shaft piston ring slot 8. The resulting assembly will aid in the prevention of the hot exhaust gases, which drive the turbine wheel 11, from entering the area near the turbocharger bearing area, and thus enhance thermal isolation of the hot side of the turbocharger.

Referring to Figure 4 as well as Figure 2, the turbine end of the shaft 16 is fitted with a series of air passage fins 26 about the periphery of the shaft 16, thereby forming air passage slots 25. The air passage fins 26 are equally spaced around the shaft 16, and engage the inner surface of the inner race 20 of the bearing assembly as shown in Figure 2. Immediately adjacent the air passage fins 26, the inner race 20 is equipped with an air slinger 27 having an air slinger bore 28. Rotation of the shaft 16, inner race 20, and air slinger 27 creates a centrifugal force on the air within the air slinger bore 28, causing it to pass out of the air slinger bore 28, creating an air flow along the outer surface of the shaft 16 in the annular space between the shaft 16 and the inner surface of the inner race 20. Air enters this passage through an air inlet passage 29 near the compressor end of the turbocharger. The air flow produces a countercurrent cooling effect on the inner race 20, to compress the temperature gradient created in the inner race 20 by virtue of its contact with the hot exhaust gases driving the turbine wheel 11.

Referring to Figures 2 to 5, the inner race 20 supports the ball bearings generally designated as 30 for the compressor side of the turbocharger and 31 for the turbine side of the turbocharger. The ball bearings 30 and 31 are located within an inner race groove 62 and inner race groove 63 respectively. The ball bearings 30 and 31 are separated peripherally about the inner race 20 by ball bearing separators 60 and 61 respectively.

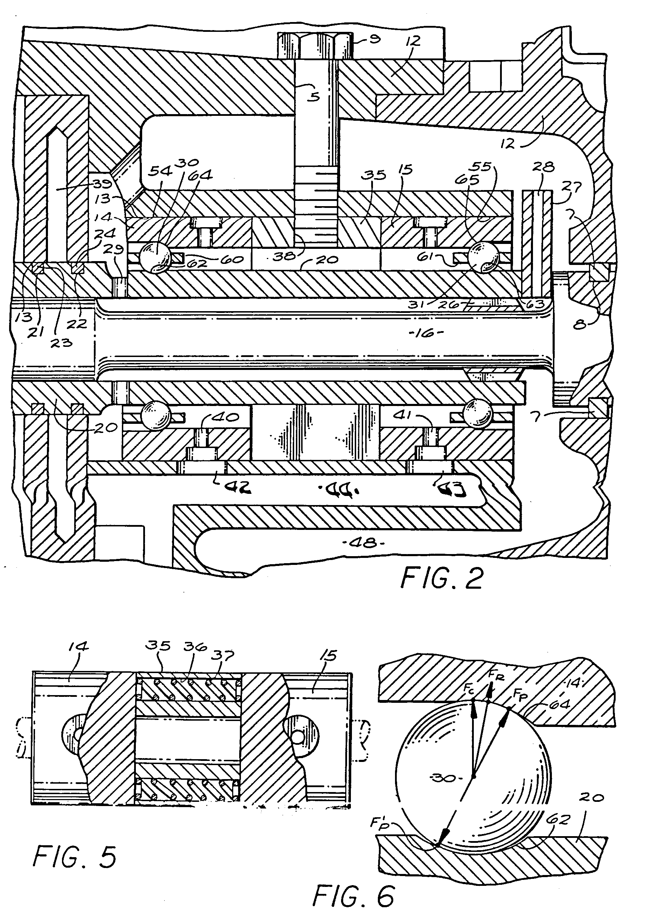

Figure 6 which shows an enlarged view of the compressor side of the outer race 14, the inner race 20 and one ball bearing 30, illustrates the forces at work under preloading. The compressor side outer race 14 has a shoulder 64, on its inner surface which engages the ball bearings 30 (while the turbine side outer race 15 has a shoulder 65, on its inner surface, which engages the ball bearings 31). Under a preloaded, (non-operated) condition, the compressor side outer race 14 is urged to the left, parallel to and relative to the inner race 20. The inwardly sloping outer race shoulder 64 of the outer race 14 engages the ball bearings 30 against the inner race groove 62 of the inner race 20. The compressor side outer race 14 and the inner race 20 are then connected by forces in the ball bearings 30 which exist from a point labelled Fₚ on the compressor side outer race 14 to a point labelled F'ₚ on the inner race 20. Without preloading, the centrifugal orbit of the ball bearing 30 against the compressor side outer race 14 would produce a centrifugal force when running labelled F_{C}. The F_{C} force, which is perpendicular to the axis of the shaft, would tend to press the inner surface of the outer race centrifugally outwards.

If any two races and ball bearings were designed without preloading, and even if the tolerances between the ball bearings and both of the other surfaces were set to zero, the centrifugal forces of the ball bearings 30 would push the compressor side outer race 14 radially outwards, thus creating a gap between the ball bearings 30 and the inner race 20. Such a gap would allow the shaft to "wobble" and nutate at high speeds. In the case of a turbocharger where extremely high speeds are the norm, the destruction of the turbocharger would occur.

Under conditions of preloading, the ball bearings 30 at rest exert the force Fₚ against the compressor side outer race 14. As the bearings begin to turn, the ball bearings 30 tend to exert an increasing centrifugal force against the internal surface of the compressor side outer race 14, represented by F_{C}. The combination of these two forces results in a resultant force F_{R} shown in Figure 6 as being angularly between F_{P} and F_{C}. As the speed increases, F_{C} becomes larger with respect to Fₚ, and the resultant force F_{R} shifts anticlockwise between Fₚ and F_{C}. The leftward force on the compressor side outer race 14 due to preloading must always be great enough that the resultant force F_{R} will never be close enough to F_{C} to allow the ball bearings 30 to break contact with the inner race 20 or the compressor side outer race 14. In this manner, regardless of the wear on the inner race 20, the compressor side outer race 14, or ball bearings 30, the shaft is always kept in perfect alignment. Similarly, regardless of wear on the turbine side of the inner race 20, the turbine side outer race 15 or the ball bearings 31, the shaft is always kept in perfect alignment.

To urge the two outer races 14 and 15 away from each other, a horseshoe-shaped spacer assembly 35 is located between them. Referring to Figure 3, the spacer assembly 35 is provided with preload spring pockets 36 containing preload springs 37 which act to force the two outer races 14 and 15 axially away from each other. The length of the spacer assembly 35 is important because once fitted in place between the compressor side outer race 14 and turbine side outer race 15, the total clearance between the spacer assembly 35 and the two outer races 14 and 15 will determine the amount of axial float allowed for the shaft 16. This clearance is chosen so that regardless of how much the outer races 14 and 15 shift axially, the multiple coil springs 37 are always able to exert the aforementioned sufficient amount of force on the two outer races 14 and 15 in order to keep the ball bearings 30 and 31 in full contact with inner race 20. The horseshoe spacer assembly 35 is held in place within the body 12 by a threaded locating pin 9 which is fitted through an aperture 5 in the turbocharger body 12. The spacer assembly 35 is equipped with a threaded bore 38 into which the locating pin threads 6 of the locating pin 9 fit.

Referring again to Figure 2, the compressor side of the inner race 20 is equipped with slots 21 and 22. Piston rings 23 and 24 fit frictionally within the inner surface of a bore 13 in the body, and are adapted to fit within the piston ring slots 21 and 22 respectively, to aid in isolating the inside of the turbocharger from the compressed fluid to which the compressor wheel 10 is exposed. An oil drainage vent 39 is provided within the body 12 between the two piston rings 23 and 24 in order to allow the escape of any of the compressor side fluid, which may have been able to creep past the piston ring 23, before it is able to creep past the piston ring 24.

The external surfaces of the outer races 14 and 15 may be cylindrical or they may be bevelled to a slight frusto-conical shape, each frusto-conical section, at its smaller diameter, being further away from the horseshoe shaped spacer 35. The slight frusto-conical taper creates an annular space 54 between the external surface of outer race 14 and the internal surface of the body bore 13. Similarly, an annular space 55 is created between the external surface of the outer race 15 and the internal surface of the body bore 13. This space, when occupied with a fluid of sufficient viscosity, preferably lubricating oil, creates a squeeze film damper which resists radial displacement of the bearing assembly within the body bore 13. Since energy is required to "squeeze" the liquid film from one side of its annular space to the other, any exerted energy of the rotating shaft, which tends to displace the axis of the shaft 16 and its associated bearing parts angularly, will be dampened by the energy requirement of the shifting fluid of the squeeze film damper.

The compressor side outer race 14 contains an outer race oil inlet aperture 40 and the turbine side outer race 15 contains an oil inlet aperture 41. The oil inlet aperture 40 is in fluid communication with a body oil inlet aperture 42 and the oil inlet aperture 41 is in fluid communication with a body oil inlet aperture 43. Both body oil inlet apertures 42 and 43 are connected to an oil supply channel 44 which is in turn connected to an oil supply channel 45 (also shown in Figure 1).

Referring to Figure 1, oil for lubrication and cooling is electrically pumped through the oil supply channel 45, and then through the oil supply channel 44, to be supplied through the body oil inlet apertures 42 and 43, and the oil inlet apertures 40 and 41. It then flows into the annular space between the inner race 20 and the outer races 14 and 15. At its destination, the oil lubricates the ball bearings 30 and 31, absorbs heat from the inner race 20, and exits to a drain area 48 from various points within the bearing structure.

Within the body 12, the oil supply channel 45 extends into a cylindrically shaped oil filter 47 situated concentrically within an oil cartridge 50 at the bottom of the body 12. The oil cartridge 50 is connected to the body 12 by means of threads 51. the oil level shown at 49 within the cartridge casing is higher outside the periphery of the filter 47 than inside the filter 47. Oil returning from lubrication and cooling within the turbocharger arrives outside the filter 47 and due to the higher oil level 49 outside the filter 47, the oil sets up a gravity-induced height gradient within the walls of the filter 47 to provide the force for the transport of the oil through the filter 47.

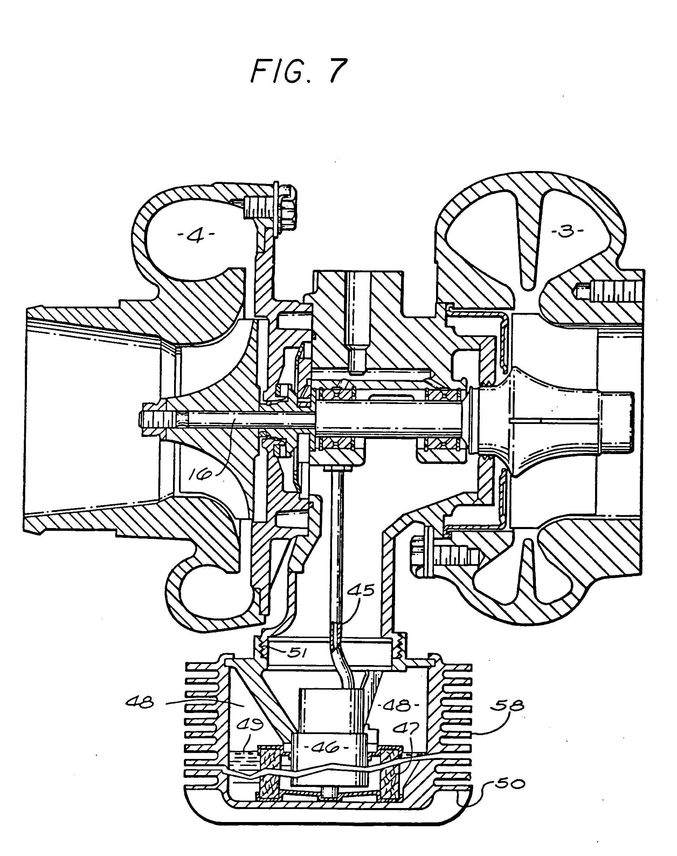

An electrically driven pump 46, located concentrically within the filter 47, pumps the filtered oil through the oil supply channel 45 and back to the internals of the turbocharger to provide lubrication and cooling. The pump 46 is powered by an electrical source, which is usually the engine starting battery or electrical system. While being filtered, the oil contained within the oil cartridge 50 is cooled by heat conduction through the surface of the oil cartridge 50, which is provided with ribs 58 to enhance heat exchange. Figure 7 illustrates the cartridge-type lubrication system attached to a conventional exhaust driven turbocharger which does not have a ball bearing cartridge.

In the operation of the turbocharger of the present invention, hot exhaust gases are introduced into the turbine housing 3 to drive the turbine wheel 11. The action of the preload springs 37 on the compressor side outer race 14 and the turbine side outer race 15 maintains full contact of the outer races 14 and 15 on the ball bearings 30 and 31 and therefore full contact of ball bearings 30 and 31 on the inner race 20. This condition will remain even when the diameter of the ball bearings 31 and 32 is reduced by wear. While the turbocharger is operating, the action of the dampening effect of the squeezable clearances 54 and 55 act to maintain the shaft 16 in alignment as the turbine wheel 11 is driven by the hot gases. The shaft 16 then turns the compressor wheel 10 within the compressor housing 4 to compress the desired fluid.

During operation, the electrically driven pump 46 pumps oil, which has been filtered by the filter 47, through the oil supply channel 45, the oil supply channel 44, the body oil inlet apertures 42 and 43 and the oil inlet apertures 40 and 41, into the annular space between the outer races 14 and 15 and the inner race 20 for the lubrication of the ball bearings 30 and 31, or in the case of Figure 7, to the conventional floating sleeve bearing.

## Claims

1. A turbocharger comprising: a turbine, having a turbine wheel (11); a compressor, having a compressor wheel (10); a shaft (16) having two ends, one end being connected to the turbine wheel and the other end being connected to the compressor wheel; bearing means, for rotatably supporting the shaft, the bearing means including a first bearing (30,60,62,64) at the turbine end of the shaft (16) and a second bearing (31,61,63,65) at the compressor end of the shaft (16); and a housing disposed between the turbine and compressor, the housing supporting the bearing means, characterised in that the bearing means is a ball bearing cartridge bearing in which the first and second bearings share a common race (20).

2. A turbocharger as claimed in Claim 1 characterised by lubrication means (46,50) which are separate from the internal combustion engine lubrication system to lubricate the bearing means.

3. A turbocharger as claimed in Claim 1 or Claim 2 characterised in that the bearing means includes an inner race (20) rotatable with the shaft (16), a plurality of outer races (14,15) supported by the centre housing and a multiplicity of ball bearings (30,31) disposed between the inner and outer races to allow the inner race (20) to rotate with respect to the outer races (14,15).

4. A turbocharger as claimed in Claim 3 characterised in that the bearing means includes means (35-37) to preload the ball bearings (30,31) towards the rotatable inner race (20).

5. A turbocharger as claimed in Claim 3 or 4 characterised by air ventilation means along the surface of the shaft (16) in the form of an air slinger (27), mounted on the inner race (20), freely rotatable within the main housing.

6. A turbocharger as claimed in 5 characterised in that the ventilation means further comprises a multiplicity of ribs (26) mounted in the annular space between the shaft (16) and the inner race (20), and parallel to the axis of the shaft, to allow air flow longitudinally along the shaft in the annular space between the outer surface of the shaft (16) and the inner surface of the inner race (20), the inner race having one or more apertures (29) near the end of the shaft opposite the air slinger (27), to permit entry of air into the annular space between the shaft and the inner race, to facilitate air flow for cooling the shaft.

7. A turbocharger as claimed in any of Claims 3 to 6 characterised by a squeeze film damper (54,55) between the outer periphery of the outer races and the inner periphery of the bearing bore within the main housing, to absorb energy and thus dampen any tendency of the bearing assembly and the shaft towards axial angular displacement.

8. A turbocharger as claimed in Claim 7 characterised in that the squeeze film damper is formed by each of the outer races having an external surface whose general cylindrical shape is reduced to a slight frusto-conical shape.

9. A turbocharger as claimed in any preceding claim characterised in that the lubrication means has a ribbed exterior (58) to aid in the dissipation of heat.

10. A turbocharger as claimed in any preceding claim characterised in that the bearing means is a cartridge bearing which comprises: a tubular inner ball bearing race (20) having an internal diameter suitable for fitting around the outside diameter of the turbocharger shaft (16) to be supported, the inner race (20) also having a pair of outwardly disposed grooves (62,63), located on its outside circumference, axially near the ends of the inner race; a multiplicity of ball bearings (30,31) situated circumferentially around the outer diameter of the inner race (20) and within the grooves (62,63) of the inner race; a ball bearing separator (60,61) fittable circumferentially outwards of the external diameter of the inner race (20), the ball bearing separator (60,61) having a series of circular slots about the midpoint of its axial length, the slots being dimensioned to receive the ball bearings and to separate the ball bearings in their orbit around the inner race (20); a pair of outer races (14,15) annularly cylindrically shaped, each having an axially linear outside surface, and having an internal shoulder (34,35) such that the greater diameter of the internal surface is nearer the end outwardly disposed with respect to the ball bearing cartridge assembly, the shoulder allowing the outer races to be slipped directly over the ball bearings (30,31) located within the grooves of the inner race (20) and to continue until the shoulder within the internal diameter of the inner wall of the outer race contacts and bears against the ball bearings, further urging the ball bearings against the groove of the inner race; a spacer assembly (35 - 37) generally of annular piston-like shape, having a parallel sided opening along its length, the opening being greater than the diameter of the inner race, around which the spacer assembly lies, the spacer assembly further having a series of longitudinal bores (36) whose axes are parallel to the axis of the spacer assembly, the bores being radially spaced about the axis of the spacer assembly for axially separating and urging apart the outer races; and a multiplicity of preload springs (37) located within the bores, the preload springs acting to urge contact with the inwardly disposed faces of the outer races (14,15) thereby springingly urging the outer races away from each other and away from the spacer assembly, in order to maintain the force applied to the ball bearings by the bearing pressure of the inner and outer races against the ball bearings.

## Patentansprüche

1. Turbolader mit: einer Turbine mit einem Turbinenrad (11); einem Kompressor mit einem Kompressorrad (10); einer Welle (16) mit zwei Enden, wovon ein Ende mit dem Turbinenrad und das andere Ende mit dem Kompressorrad verbunden ist; einer Lagereinrichtung zum drehbaren Lagern der Welle, wobei die Lagereinrichtung ein erstes Lager (30,60,62,64) am Turbinenende der Welle (16) und ein zweites Lager (31,61,63,65) am Kompressorende der Welle (16) aufweist; und einem zwischen der Turbine und dem Kompressor angeordneten Gehäuse, welches Gehäuse die Lagereinrichtung trägt, dadurch gekennzeichnet, daß die Lagereinrichtung ein als Kugellager ausgebildetes Patronenlager ist, in dem das erste und das zweite Lager sich einen gemeinsamen Laufring (20) teilen.

2. Turbolader nach Anspruch 1, gekennzeichnet durch Schmiereinrichtungen (46,50), die vom Schmiersystem für den Motor mit innerer Verbrennung gesondert sind, um die Lagereinrichtung zu schmieren.

3. Turbolader nach Anspruch 1 oder Anspruch 2, dadurch gekennzeichnet, daß die Lagereinrichtung einen inneren, mit der Welle (16) drehbaren Laufring (20), eine Mehrzahl von äußeren, von dem zentralen Gehäuse getragenen Laufringen (14,15) sowie eine Vielzahl von Lagerkugeln (30,31) aufweist, die zwischen der inneren und den äußeren Laufringen angeordnet sind, um eine Drehung des inneren Laufringes (20) bezüglich der äußeren Laufringe (14,15) zu gestatten.

4. Turbolader nach Anspruch 3, dadurch gekennzeichnet, daß die Lagereinrichtung Einrichtungen (35-37) zum Vorspannen der Lagerkugeln (30,31) gegen den inneren, drehbaren Laufring (20) aufweist.

5. Turbolader nach Anspruch 3 oder 4, gekennzeichnet durch Luftventilationseinrichtungen entlang der Welle (16) in Form eines am inneren Laufringe (20) montierten Luftschleuderringes (27), der innerhalb des Hauptgehäuses frei drehbar ist.

6. Turbolader nach Anspruch 5, dadurch gekennzeichnet, daß die Ventilationseinrichtungen ferner eine Vielzahl von im Ringraume zwischen der Welle (16) und dem inneren Laufringe (20), parallel zur Achse der Welle befestigten Rippen (26) aufweisen, um einen Luftstrom der Länge nach entlang der Welle im Ringraume zwischen der äußeren Fläche der Welle (16) und der Innenfläche des inneren Laufringes (20) zu erlauben, wobei der innere Laufring eine oder mehrere Öffnungen (29) nahe dem Ende der Welle und gegenüber dem Luftschleuderring (27) besitzt, um das Eintreten von Luft in den Ringraum zwischen der Welle und dem inneren Laufringe zu erlauben, um es dem Luftstrom zu erleichtern, die Welle zu kühlen.

7. Turbolader nach einem der Ansprüche 3 bis 6, gekennzeichnet durch einen Filmeinschnürdämpfer (54,55) zwischen dem Außenumfange der äußeren Laufringe und dem Innenumfange der Lagerbohrung innerhalb des Hauptgehäuses, um Energie zu absorbieren und somit jegliche Tendenz der Lagereinheit und der Welle zu einer axialen Winkelverschiebung zu dämpfen.

8. Turbolader nach Anspruch 7, dadurch gekennzeichnet, daß der Filmeinschnürdämpfer dadurch gebildet ist, daß jeder der äußeren Laufringe eine Außenfläche besitzt, deren im wesentlichen zylindrische Form zu einer leichten Kegelstumpfform reduziert ist.

9. Turbolader nach einem vorhergehenden Anspruch, dadurch gekennzeichnet, daß die Schmiereinrichtung eine gerippte Außenseite (58) besitzt, um die Ableitung von Hitze zu unterstützen.

10. Turbolader nach einem vorhergehenden Anspruch, dadurch gekennzeichnet, daß die Lagereinrichtung ein Patronenlager ist, welches aufweist: einen rohrförmigen inneren Kugellager-Laufring (20) mit einem Innendurchmesser, welcher so ausgebildet ist, daß er rund um den Außendurchmesser der zu lagernden Turboladerwelle (16) paßt, wobei der innere Laufring (20) auch ein Paar von nach außen zu angeordneten Nuten (62,63) besitzt, welche an seinem Außenumfange, axial nahe den Enden des inneren Laufringes angeordnet sind; eine Vielzahl von Lagerkugeln (30,31), die über den Umfang rund um den Außendurchmesser des inneren Laufringes (20) und innerhalb der Nuten (62,63) des inneren Laufringes angeordnet sind; einen Distanzhalter (60,61) für die Lagerkugeln, der am Umfange außerhalb des Außendurchmessers des inneren Laufringes (20) einpaßbar ist, wobei der Distanzhalter (60,61) für die Lagerkugeln eine Reihe von kreisförmigen Schlitzen um den Mittelpunkt seiner axialen Länge besitzt, wobei die Schlitze derart dimensioniert sind, daß sie die Lagerkugeln aufnehmen und die Lagerkugeln in ihrer Umlaufbahn rund um den inneren Laufring (20) voneinander separieren; ein Paar von äußeren ringzylindrisch geformten Laufringen (14,15), von denen ein jeder eine in Achsrichtung lineare Außenfläche sowie eine innere Schulter (34,35) in einer solchen Weise besitzt, daß der größere Durchmesser der Innenfläche näher demjenigen Ende ist, welches bezüglich der Patroneneinheit der Kugellager auswärts angeordnet ist, wobei es die Schulter den äußeren Laufringen gestattet, unmittelbar über die innerhalb der Nuten des inneren Laufringes (20) angeordneten Lagerkugeln (30,31) darübergeschoben zu werden und dies fortzusetzen, bis die Schulter innerhalb des Innendurchmessers der Innenwand des äußeren Laufringes die Lagerkugeln berührt und sich daran abstützt, wobei sie die Lagerkugeln weiter gegen die Nut des inneren Laufringes drängt; eine Abstandhalteeinheit (35 - 37) von einer im wesentlichen ringkolbenartigen Form mit einer mit zueinander parallelen Seiten versehenen Öffnung entlang ihrer Länge, wobei die Öffnung größer als der Durchmesser des inneren Laufringes ist, rund um die Abstandhalteeinheit gelegen ist, welche Abstandhalteeinheit ferner eine Reihe von Längsbohrungen (36) besitzt, deren Achsen parallel zur Achse der Abstandhalteeinheit sind, welche Bohrungen rund um die Achse der Abstandhalteeinheit in Radialrichtung voneinander beabstandet sind, um die äußeren Lauffringe in Achsrichtung voneinander zu trennen und auseinanderzudrängen; und eine Vielzahl von innerhalb der Bohrungen angeordneten Vorspannfedern (37), welche Vorspannfedern derart wirken, daß sie den Kontakt mit den einwärts gelegenen Flächen der äußeren Laufringe (14,15) suchen und damit die äusseren Laufringe federnd auseinander und weg von der Abstandhalteeinheit drängen, um die an die Lagerkugeln durch den Lagerdruck der inneren und äußeren Laufringe gegen die Lagerkugeln angelegte Kraft aufrechtzuerhalten.

## Revendications

1. Turbocompresseur à suralimentation comprenant : une turbine, comportant une roue de turbine (11) ; un compresseur, comportant une roue de compresseur (10) ; un arbre (16) ayant deux extrémités, une extrémité étant raccordée à la roue de turbine et l'autre extrémité étant raccordée à la roue de compresseur : des moyens de palier pour supporter de manière tournante l'arbre, les moyens de palier comportant un premier palier (30, 60, 62, 64) à l'extrémité turbine de l'arbre (16) et un second palier (31, 61, 63, 65) à l'extrémité compresseur de l'arbre (16) ; et un logement disposé entre la turbine et le compresseur, le logement supportant les moyens de palier, caractérisé en ce que le moyen de palier est un palier à cartouche de roulement à billes dans lequel les premier et second roulements partagent un chemin de roulement commun (20).

2. Turbocompresseur à suralimentation selon la revendication 1, caractérisé par des moyens de lubrification (46, 50) qui sont séparés du système de lubrification du moteur à combustion interne pour lubrifier les moyens de palier.

3. Turbocompresseur à suralimentation selon la revendication 1 ou la revendication 2, caractérisé en ce que le moyen de palier comporte un chemin de roulement interne (20) qui peut tourner avec l'arbre (16), une multitude de chemins de roulement externes (14, 15) supportés par le logement au centre et une multitude de roulements à billes (30, 31) disposés entre les chemins de roulement interne et externe pour permettre au chemin de roulement interne (20) de tourner par rapport aux chemins de roulement externes (14, 15).

4. Turbocompresseur à suralimentation selon la revendication 3, caractérisé en ce que le moyen de palier comporte un moyen pour présolliciter les roulements à billes (30, 31) vers le chemin de roulement interne qui peut tourner (20).

5. Turbocompresseur à suralimentation selon la revendication 3 ou 4, caractérisé par un moyen de ventilation par air suivant la surface dudit arbre (16) sous la forme d'une bague distributrice (27) montée sur le chemin de roulement interne (20) qui peut tourner librement à l'intérieur du logement principal.

6. Turbocompresseur à suralimentation selon la revendication 5, caractérisé en ce que le moyen de ventilation comprend de plus une multitude d'ailettes (26) montées dans l'espace annulaire entre l'arbre (16) et le chemin de roulement interne (20), et parallèle à l'axe de l'arbre, pour permettre l'écoulement de l'air longitudinalement suivant l'arbre dans l'espace annulaire situé entre la surface externe de l'arbre 16 et la surface interne du chemin de roulement interne (20), le chemin de roulement interne ayant une ou plusieurs ouvertures (29) près de l'extrémité de l'arbre opposée à la bague distributrice d'air (27) pour permettre l'entrée de l'air dans l'espace annulaire entre l'arbre et le chemin de roulement interne, afin de faciliter l'écoulement de l'air pour refroidir l'arbre.

7. Turbocompresseur à suralimentation selon l'une quelconque des revendications 3 à 6, caractérisé par un amortisseur à couche comprimée (54, 55) situé entre la périphérie extérieure des chemins de roulement externes et la périphérie intérieure de l'alésage de palier à l'intérieur du logement principal, pour absorber l'énergie et ainsi amortir toute tendance de l'ensemble de paliers et de l'arbre à avoir un déplacement angulaire axial.

8. Turbocompresseur à suralimentation selon la revendication 7 caractérisé en ce que l'amortisseur à couche comprimée est formé par chacun des chemins de roulement externes ayant une surface externe dont la forme cylindrique générale est réduite en une forme légèrement en cône tronqué.

9. Turbocompresseur à suralimentation selon l'une quelconque des revendications précédentes, caractérisé en ce que le moyen de lubrification comporte un extérieur muni d'ailettes (58) pour aider à dissiper la chaleur.

10. Turbocompresseur à suralimentation selon l'une quelconque des revendications précédentes, caractérisé en ce que le moyen de palier est un palier à cartouche qui comprend : un chemin de roulement à billes interne tubulaire (20) ayant un diamètre interne approprié pour être adapté autour du diamètre extérieur de l'arbre du turbocompresseur à suralimentation (16) qui doit être supporté, le chemin de roulement interne (20) ayant également une paire de rainures disposées vers l'extérieur (62, 63), placées sur sa circonférence extérieure, axialement près des extrémités du chemin de roulement interne ; une multitude de roulements à billes (30, 31) situés circonférentiellement autour du diamètre extérieur du chemin de roulement interne (20) et vers l'intérieur des rainures (62, 63) du chemin de roulement interne ; un séparateur de roulement à billes (60, 61) adaptable circonférentiellement vers l'extérieur du diamètre externe du chemin de roulement interne (20), le séparateur de roulement à billes (60, 61) ayant une série de fentes circulaires autour du point milieu de sa longueur axiale, les fentes étant dimensionnées pour recevoir les roulements à billes et pour séparer les roulements à billes dans leur orbite autour du chemin de roulement interne (20) ; une paire de chemins de roulement externes (14, 15) formés annulairement cylindriquement, chacun ayant une surface extérieure axialement linéaire, et ayant un épaulement interne (34, 35) de sorte que le diamètre le plus grand de la surface interne est plus près de l'extrémité disposée vers l'extérieur par rapport à l'ensemble de cartouches de roulement à billes, l'épaulement permettant aux chemins de roulement externes de glisser directement sur les roulements à billes (30, 31) placés à l'intérieur des rainures du chemin de roulement interne (20) et de poursuivre jusqu'à ce que l'épaulement à l'intérieur du diamètre interne de la paroi interne du chemin de roulement externe vienne en contact et porte contre les roulements à billes, poussant encore les roulements à billes contre la rainure du chemin de roulement interne ; un ensemble d'écarteur (35 à 37) généralement de forme identique à un piston annulaire, ayant une ouverture sur le côté parallèle suivant sa longueur, l'ouverture étant supérieure au diamètre du chemin de roulement interne autour duquel l'ensemble d'écarteur se trouve, l'ensemble d'écarteur ayant de plus une suite d'alésages longitudinaux (36) dont les axes sont parallèles à l'axe de l'ensemble d'écarteur, les alésages étant radialement espacés autour de l'axe de l'ensemble d'écarteur pour séparer et pousser à part axialement les chemins de roulement externes ; et une multitude de ressorts de présollicitation (37) placés à l'intérieur des alésages, les ressorts de présollicitation agissant pour amener en contact les faces disposées vers l'intérieur des chemins de roulement externes (14, 15) poussant par sollicitation de ce fait les chemins de roulement externes à l'opposé l'un de l'autre et à l'opposé de l'ensemble d'écarteur, afin de maintenir la force appliquée au roulement à billes par la pression d'appui des chemins de roulement interne et externe contre les roulements à billes.
